# EUROPEAN PATENT APPLICATION

(11) **EP 0 979 600 A1**
(43) Date of publication of application: **16.02.2000**
(21) Application number: 99202576.7
(22) Date of filing: 05.08.1999
(51) Int. Cl.: A01D 78/12

(54) **A raking machine**

(30) Priority: 10.08.1998 NL 1009827
(71) Applicant: MAASLAND N.V., 3155 PD Maasland (NL)
(72) Inventor: van den Engel, Alfonsus Jacobus, 3123 CM Schiedam (NL); van Hemert, Norbert, 3067 CB Rotterdam (NL)
(74) Representative: Corten, Maurice Jean F.M.

(57) **Abstract**

A driven rake machine comprises a mechanically controlled rake member (1) provided with a number of tine arms (3) with rake tines (4). Each tine arm (3) is pivotably fastened to a central portion (2) of the rake member (1) and can be controlled in such a manner that during operation the position of the rake tines (4) cyclically varies between a first position for picking up and taking along crop lying on the soil and a second position for releasing the crop. The tine arms (3) each comprise a first subportion (12), which is rotatably connected with the central portion (2), and a second subportion (13) to which the rake tines (4) are fastened, which second subportion (13) is connected to the first subportion (12). The first subportion (12) is fastened to the central portion (2) in a manner in which it is moving ahead relative to the central portion, and the second subportion (13) is fastened to the first subportion (12) in such a manner that the rake tines (4), in their first position, are dragging, i.e. lagging behind, relative to the first subportion (12).

## Description

The invention relates to a raking machine as described in the preamble of claim 1. With such a mechanically controlled raking machine, during a rotation of the rake member, crop lying on the soil is first picked up by the downwardly orientated rake tines of a tine arm and taken along, whereupon the relevant tine arm is pivoted, so that the rake tines are moved upwards against the direction of movement of the tine arm. As a result thereof the crop taken along is released so as to form a swath.

From the German Gebrauchsmuster No. 6903637 it is known that the tine arms are constituted by two subportions of which the outer subportion is fastened to the radially extending inner subportion in a manner in which it is dragging, i.e. lagging behind, relative to said inner subportion. Thus it is achieved that, when the rake tines are pivoted upwards, the outer ones thereof are pivoted upwards to a greater extent, which is advantageous to the swath formation. The known implement has inter alia the drawback that fastening of the outer subportion to the inner subportion in a manner in which it is dragging, i.e. lagging behind, relative to the inner subportion, is only possible to a very small extent, because, otherwise, the position of the row of rake tines of the tine arm relative to its direction of movement would be too slanting.

The invention aims at providing an improved and more optimally operating raking machine. In accordance with the invention, this is achieved by the measures mentioned in the characterizing part of claim 1. By fastening the first subportion to the central portion in a manner in which the first subportion is moving ahead relative to the central portion, the angle between the two subportions can be reduced whilst maintaining the desired slightly dragging position of the rake tines. As a result thereof the angle of the row of rake tines relative to its direction of movement can be chosen optimally, on the one hand, and the outer rake tines, when pivoting upwards, are able to describe a part of a circular path having a large radius, on the other hand. As a result thereof there is obtained an improved swath formation.

The invention will now be explained in further detail with reference to the accompanying drawings.
Figure 1 is a schematic plan view of a raking machine according to the invention;
Figure 2 is a schematic side view of a tine arm according to Figure 1, in the direction of the arrow II;
Figure 3 is a schematic plan view of a tine arm according to an embodiment of the raking machine, and
Figure 4 shows schematically the relevant angles in the rake member.

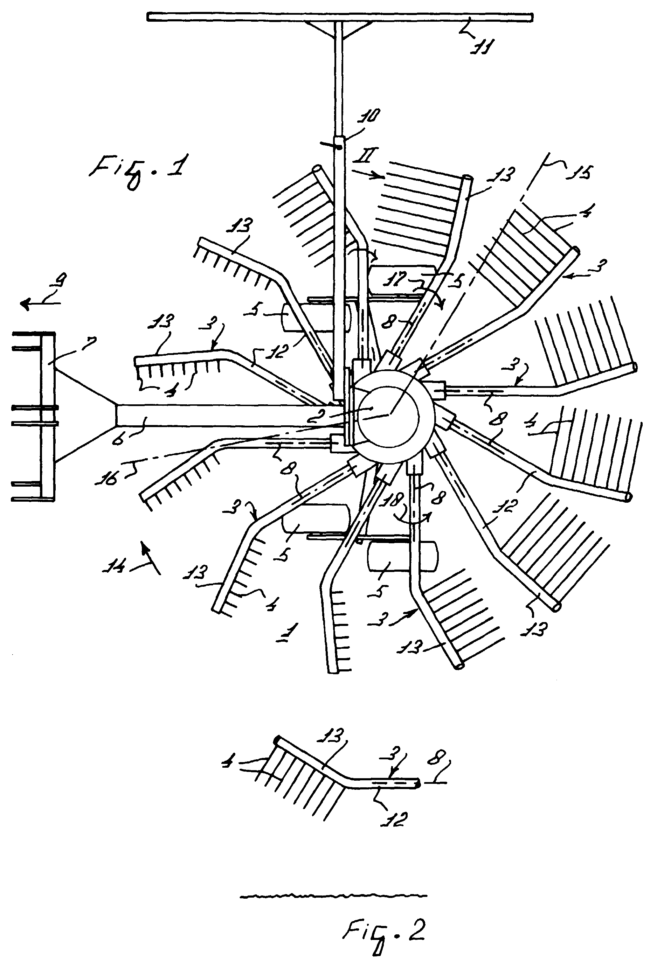

Figure 1 is a schematic plan view of a raking machine according to the invention. The raking machine comprises a mechanically controlled rake member 1, rotatable about an upwardly orientated axis, said rake member 1 having a central portion 2 and a number of tine arms 3 fastened thereto, which tine arms 3 are provided with rake tines 4. The central portion 2 is provided with a wheel assembly 5 and can be fastened to a non-shown tractor via a drawbar 6 with a connecting piece 7. The rake member 1 can be driven by means of the hydraulic system and/or the power take-off shaft of the tractor.

Each tine arm 3 is fastened, pivotably about a relevant axis 8 of the tine arm, to the central portion 2 of the rake member 1. The tine arm 3 can be mechanically controlled in such a manner that, during operation, the position of the rake tines 4 varies cyclically between a first position for picking up and taking along crop lying on the soil (in Figure 1: below on the left) and a second position for releasing the crop (in Figure 1: above on the right). During each rotation of the tine arm 3 around the central portion 2 the angle of the row of rake tines 4 relative to the ground varies. In the first position the rake tines 4 are orientated substantially downwardly. In the second position each of the rake tines 4 is orientated approximately horizontally. Seen in the direction of travel 9 of the tractor, the crop is picked up on the left, (so in Figure 1: below), is taken along by the rake tines 4 and is subsequently released on the right (so in Figure 1: above). With the aid of a swath board 11 fastened to the rake member 1 via a rod 10, the released crop forms a swath. The periodical pivoting movement of the tine arms 3 can be realized in a known manner by means of a non-shown gear wheel construction, disposed in the central portion 2, and a cam setting device. The pivoting movement is illustrated in Figure 1 by means of the arrows 17 and 18.

The tine arms 3 each comprise a first subportion 12, one end of which is rotatably connected with the central portion 2. The axis of the first subportion 12 coincides with the axis 8 of the tine arm, so that the tine arm 3 is capable of rotating about the axis of its first subportion 12. The other end of the first subportion 12 is connected with one end of a second subportion 13, to which the row of rake tines 4 is fastened. The assembly of the first subportion 12 and the second subportion 13 can be constituted in a simple manner by one curved tube to which the rake tines 4 are fastened. The first subportion 12 is fastened to the central portion 2 in a manner in which it is moving ahead relative to the central portion 2, i.e. the other end of the first subportion 12 is located, seen in the direction of rotation 14 of the rake member 1, before a radius 15 of the central portion 2, said radius 15 extending through the fastening point of the first subportion 12 to the central portion 2. The second subportion 13 is connected with the first subportion 12 in such a manner that, during operation, the rake tines 4, at least in their first position, are dragging, i.e. lagging behind, relative to the first subportion 12. The second subportion 13 encloses such an angle with the first subportion 12 that, during operation, the other end of the second subportion 13, at least in the first position of the rake tines 4, seen in the direction of rotation 14 of the rake member 1, is located behind a radius 16 of the central portion 2, said radius 16 extending through the fastening point of the second subportion 13 to the first subportion 12.

The dragging position of the rows of rake tines 4 is advantageous during raking. The position of the first subportions 12 in which they are moving ahead relative to the central portion 2 makes it possible for each second subportion 13 to enclose a wide angle with the extension of its associated first subportion 12. This results in that, upon a pivoting movement of the tine arm 3, the outer rake tines 4 describe a very wide circular path, which largely contributes to an accurate swath formation.

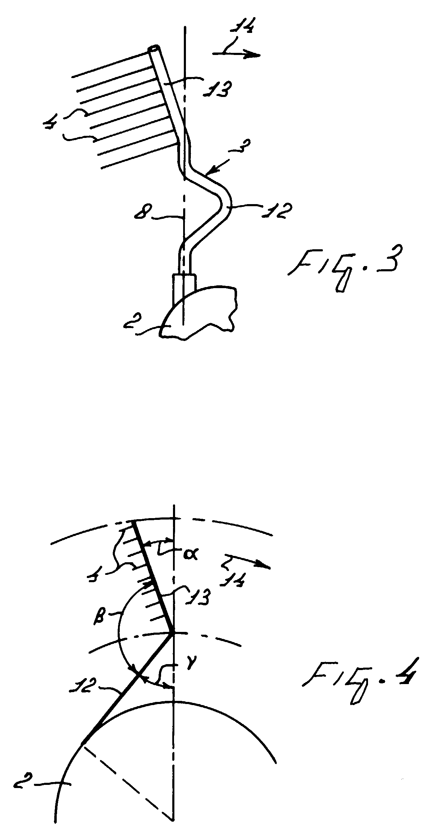

In a further embodiment of the raking machine according to Figure 3, in which a schematic plan view of a tine arm 3 is shown, the first subportion 12 is designed such that the centre of gravity of the assembly of the first subportion 12 and the second subportion 13 is situated substantially on the axis 8 of the tine arm. This is desirable for reasons of dynamics.

Figure 4 is a schematic view of the relevant angles in the rake member 1. In the first position of the rake tines 4, the second subportion 13 preferably encloses an angle α of approximately 20° with the radius 16 of the central portion 2, said radius 16 extending through the fastening point of the second subportion 13 to the first subportion 12. In practical use, this value has appeared to be optimal for various driving speeds of the raking machine and various rotational speeds of the rake member 1.

The first subportion 12 encloses an angle γ ranging between 10° and 70° with the radius 16 of the central portion 2, said radius 16 extending through the fastening point of the first subportion 12 to the second subportion 13. In a preferred embodiment the angle γ amounts to approximately 40°. In this configuration the first subportion 12 encloses an angle β of approximately 120° with the second subportion 13. It has appeared that, at these angle values, the raking machine functions optimally.

The tine arms 3 are disposed substantially tangentially on the circumference of the central portion 2. This may be advantageous in view of the activation of the tine arms 3 by means of a non-shown construction, known per se, with a cam setting device. In such a construction, because of the tangential fastening of the tine arms 3, there is realized a smallest possible angle β between the first subportion 12 and the second subportion 13.

The rake member 1 is preferably designed in such a manner that the radius of the central portion 2 divided by the length of the first subportion 12 approximately equals the tangent of the angle γ. In this way, at fixed dimensions of the round central portion 2, the length of the first subportion 12 of the tine arms 3 can be chosen optimally. At a given length of the first subportions 12 of the tine arms 3, the dimensions of the central portion 2 can be optimized.

## Claims

1. A raking machine comprising at least one mechanically controlled rake member (1) rotatable about an upwardly orientated axis, which rake member (1) is provided with a number of tine arms (3) with rake tines (4), each tine arm (3) being fastened to a central portion (2) of the rake member (1) so as to pivot about a relevant axis (8) of the tine arm and being mechanically controllable in such a manner that the position of the rake tines (4) during operation varies cyclically between a first position for picking up and taking along crop lying on the soil and a second position for releasing the crop, the tine arms (3) each comprising a first subportion (12), one end of which is rotatably connected with the central portion (2) and whose other end is connected with one end of a second subportion (13), to which the rake tines (4) are fastened, characterized in that the other end of the first subportion (12), seen in the direction of rotation (14) of the rake member (1), is located before a radius (15) of the central portion (2), said radius (15) extending through the fastening point of the first subportion (12) to the central portion (2), and that the second subportion (13) encloses such an angle with the first subportion (12) that, during operation, the other end of the second subportion (13), at least in the first position of the rake tines (4), seen in the direction of rotation (14) of the rake member, is located behind a radius (16) of the central portion (2), said radius (16) extending through the fastening point of the second subportion (13) to the first subportion (12).

2. A raking machine as claimed in claim 1, characterized in that, in the first position of the rake tines (4), the second subportion (13) encloses an angle α of approximately 20° with the radius (16) of the central portion (2), said radius (16) extending through the fastening point of the second subportion (13) to the first subportion (12).

3. A raking machine as claimed in claim 1 or 2, characterized in that the first subportion (12) encloses an angle γ ranging between 10° and 70° with the radius (16) of the central portion (2), said radius (16) extending through the fastening point of the first subportion (12) to the second subportion (13).

4. A raking machine as claimed in claim 3, characterized in that the angle γ amounts to approximately 40°.

5. A raking machine as claimed in any one of claims 1 - 4, characterized in that the first subportion (12) encloses an angle β of approximately 120° with the second subportion (13).

6. A raking machine as claimed in any one of claims 1 - 5, characterized in that the assembly of the first subportion (12) and the second subportion (13) is constituted substantially by a curved tube to which the rake tines (4) are fastened.

7. A raking machine as claimed in any one of claims 1 - 6, characterized in that the axis of the first subportion (12) coincides with the axis (8) of the tine arm.

8. A raking machine as claimed in any one of claims 1 - 7, characterized in that the first subportion (12) is designed in such a manner that the centre of gravity of the assembly of the first subportion (12) and the second subportion (13) is situated substantially on the axis (8) of the tine arm.

9. A raking machine as claimed in any one of claims 1 - 8, characterized in that the tine arms (3) are disposed substantially tangentially on the circumference of the central portion (2).

10. A raking machine as claimed in any one of claims 3 - 9, characterized in that the rake member (1) is designed in such a manner that the radius of the central portion (2) divided by the length of the first subportion (12) approximately equals the tangent of the angle γ.
